# EUROPEAN PATENT SPECIFICATION

(11) **EP 2 357 763 B1**
(45) Date of publication and mention of the grant of the patent: **03.06.2015**
(21) Application number: 09828645.3
(22) Date of filing: 27.11.2009
(51) Int. Cl.: H04L 12/46, H04L 29/06

(54) **Methods apparatuses for crossing virtual firewall to transmit and receive data**
Verfahren und Vorrichtungen zur Überquerung einer virtuellen Firewall zwecks Sendung und Empfang von Daten
Procédés et appareils permettant de franchir un pare-feu virtuel afin de transmettre et de recevoir des données

(30) Priority: 29.11.2008 CN 200810217797
(43) Date of publication of application: 17.08.2011
(60) Divisional application: 15164606.4
(73) Proprietor: Huawei Technologies Co., Ltd., Longgang District Shenzhen, Guangdong 518129 (CN)
(72) Inventor: ZHU, Zhiqiang, Shenzhen Guangdong 518129 (CN); ZHANG, Rihua, Shenzhen Guangdong 518129 (CN); HOU, Guibin, Shenzhen Guangdong 518129 (CN); XU, Yong, Shenzhen Guangdong 518129 (CN); XIE, Wenhui, Shenzhen Guangdong 518129 (CN); MA, Bo, Shenzhen Guangdong 518129 (CN); GAO, Guolu, Shenzhen Guangdong 518129 (CN); LU, Xiaoping, Shenzhen Guangdong 518129 (CN); FU, Cuihua, Shenzhen Guangdong 518129 (CN)
(74) Representative: Pfenning, Meinig & Partner GbR
(86) International application number: PCT/CN2009/075185
(87) International publication number: WO 2010/060385

(56) References cited:
- CN-A- 1 949 741
- CN-A- 101 212 453
- CN-A- 101 478 533
- US-A1- 2008 163 357

## Description

### FIELD OF THE TECHNOLOGY

The present invention relates to the field of communication technologies, and more particularly, to methods and apparatuses for sending and receiving data across virtual firewalls (VFWs).

### BACKGROUND OF THE INVENTION

A firewall is a combination of a series of components set between different networks, such as between a trusted intranet and an untrusted public network, or between network security zones. The firewall often formulates a security policy based on security zones to monitor, limit, or modify data across the firewall, and screens internal information, structures, and operation situations of a network to the outside as much as possible, so as to protect an intranet.

Recently, with the rising and developing of the Virtual Private Network (VPN) technology, the Virtual Firewall (VFW) technology has emerged accordingly. A VFW is a logical sub-entity derived from a master firewall system, and is presented to a user as an independent firewall. After a VFW is established, the master firewall system faced by a user is called a root firewall. The number of the root firewall is one, and the VFWs may be created dynamically according to configurations, and the number of the VFWs is at least one. When logical VFWs are established based on a firewall, demands of the system are satisfied, and at the same time, remaining throughputs in the system are used to provide renting services to achieve higher returns. Currently, the VPN technology has become a mainstream technology of the VFM technology. Each VFW is a complex of a VPN instance, a security instance, and a configuration instance, and is capable of providing a user of VFWs with a private route forwarding plane, security service, and configuration management plane.

With the rapid development of network security technologies, more and more large-scaled enterprises use the Internet to establish VPN networks by using Internet Protocol Security (IPSec) technology. The IPSec Protocol provides IP data with high-quality, interoperable, and cryptology-based security performance. Encryption and data source authentication are performed on the IP layer between specific communication parties, to ensure the confidentiality, integrity, and authenticity when data is transmitted through networks.

In the prior art (as shown for instance in CN 1949741 A), when a data stream across different firewalls is processed, a private security zone and a virtual security zone (VZONE) for transmitting the data stream are set in VFWs and the root firewall respectively. A port is set on any one of the private security zones that are set in the VFWs and the root firewall respectively, and security policies are set between the security zones of the VFWs and the root firewall respectively. When a data stream is sent across firewalls, a transmitting end filters the data stream by using a security policy between a source security zone of a firewall of the data stream and a VZONE of the firewall, and sends the filtered data stream to a receiving end. The receiving end filters the data stream by using a security policy between a destination security zone of a firewall where the data stream arrives and a VZONE of the firewall.

In the prior art, when a data stream across firewalls is processed, each of the firewalls needs to be configured with a VZONE. Besides security policies configured between the existing security zones of the firewalls, security policies between private security zones and the VZONE in the firewalls need to be configured respectively. With the increasing of VFWs, the number of VZONEs that need to be configured also increases continuously, more and more security policies need to be configured, and thus the configuration is very complicated. Furthermore, in the prior art, when data streams are forwarded across firewalls, security filtering needs to be performed on the data streams at the transmitting end and the receiving end to realize the forwarding of the data streams, so that not only the process is complicated, but also inter-zone relations between the firewalls are very difficult to manage.

### SUMMARY OF THE INVENTION

Embodiments of the present invention provide a method for sending and receiving data across VFWs, and the method can simplify the handling of inter-zone relations when forwarding data across different VFWs.

The present invention provides a method for sending data across VFWs. The VFWs are set with a corresponding secure tunnel, and the secure tunnel is set with a protection zone. The method for sending data across VFWs includes the following steps. Security filtering is performed on data at the first virtual firewall by using a security policy between a security zone of a data input port and a protection zone of a secure tunnel of the first VFW. The data is sent to the secure tunnel of the first VFW. The secure tunnel of the first VFW encrypts the data passing the security filtering. The encrypted data is sent to a second VFW through the secure tunnel of the first VFW. The second VFW is configured to send the data.

The present invention provides a method for receiving data across VFWs. The VFWs are set with a corresponding secure tunnel, and the secure tunnel is set with a protection zone. The method for receiving data across VFWs includes the following steps. A first VFW receives data to be decrypted, searches for a secure tunnel for decryption of the data, and sends the data to the secure tunnel for decryption. The secure tunnel for decryption decrypts the data, and modifies a security zone of an input port of the decrypted data into the protection zone of the secure tunnel for decryption. A second VFW performs security filtering on the data by using a security policy between the protection zone of the secure tunnel for decryption and the security zone where the data arrives.

The present invention further provides a sending apparatus, which includes a first security processing unit, an encryption unit, and a sending unit. The first security processing unit is set with security zones, security policies are set between the security zones respectively. The encryption unit is set with a protection zone.

The first security processing unit is configured to perform security filtering on data by using a security policy between a security zone of a data input port and the protection zone of the encryption unit, and send the data after the security filtering to the encryption unit.

The encryption unit is configured to encrypt the data that passes the first security processing unit, and send the encrypted data to the sending unit.

The sending unit is configured to send the data encrypted by the encryption unit.

The present invention further provides a receiving apparatus, which includes a receiving unit, a decryption unit, and a second security processing unit. The second security processing unit is set with security zones, and security policies are set between the security zones. The decryption unit is set with a protection zone.

The receiving unit is configured to receive data to be decrypted, search for the decryption unit of the data, and send the data to the decryption unit.

The decryption unit is configured to decrypt the data which is to be decrypted and is received by the receiving unit, and modify a security zone of an input port of the data into the protection zone of the decryption unit.

The second security processing unit is configured to perform security filtering on the data by using a security policy between the protection zone of the decryption unit and the security zone where the data arrives.

It can be seen from the technical solutions that, according to the technical solutions of the present invention, the above method for forwarding data across VFWs by using a secure tunnel is adopted, so that the security of data transmission is ensured, and at the same time, the handling of inter-zone relations between different VFWs is simplified. A security policy between two zones inside one VFW is directly used for performing security filtering on a data stream, and thus inter-zone relations are handled in a simple manner when the data stream crosses the VFWs. Therefore, data forwarding across the VFWs is achieved without adopting a method of adding security policies between security zones in various different VFWs upon configuration to process the inter-zone relationship in the prior art, when forwarding the data across the VFWs, and thus the configuration is simple, and is convenient to manage. Through the method, reuse of ports of the VFWs is effectively realized, and resources are greatly saved.

### BRIEF DESCRIPTION OF THE DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts.
FIG. 1 is a schematic structural view of firewalls according to an embodiment of the present invention;
FIG. 2 is a schematic flow chart of sending data across firewalls according to an embodiment of the present invention;
FIG. 3 is a schematic flow chart of receiving data across firewalls according to an embodiment of the present invention;
FIG. 4 is a schematic view of a sending apparatus according to an embodiment of the present invention;
FIG. 5 is a schematic view of a receiving apparatus according to an embodiment of the present invention; and
FIG 6 is a schematic view of a network system helpful for understanding the present invention.

### DETAILED DESCRIPTION OF THE EMBODIMENTS

The technical solution of the present invention will be clearly described in the following with reference to the accompanying drawings. It is obvious that the embodiments to be described are only a part of rather than all of the embodiments of the present invention. All other embodiments obtained by persons skilled in the art based on the embodiments of the present invention without creative efforts shall fall within the protection scope of the present invention.

In order to implement the embodiments of the present invention, first, a schematic view of configuration of firewalls needed in the technical solutions in embodiments of the present invention needs to be understood. For ease of description, creating 3 VFWs on a root firewall is described as an example. It should be noted that, the root firewall may be regarded as one special VFW.

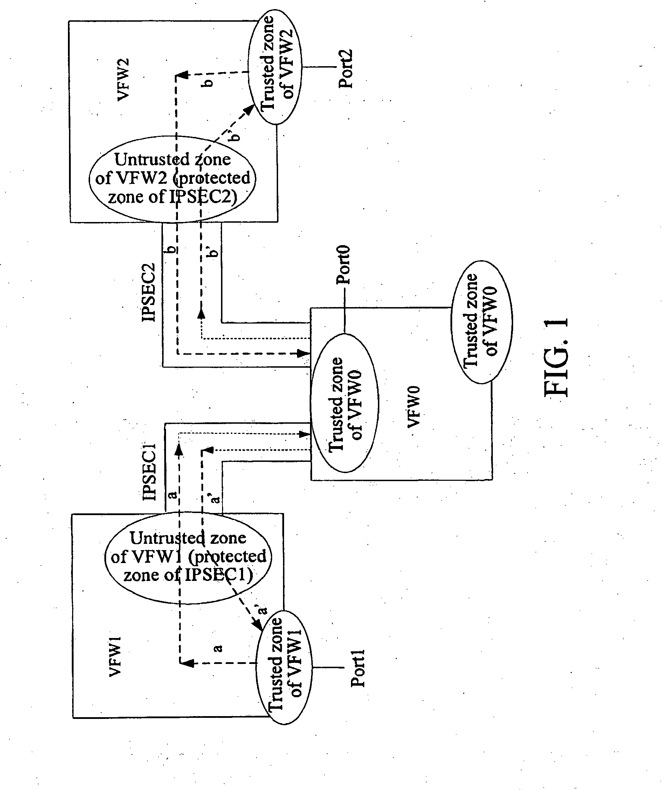

As shown in FIG. 1, VFW0, VFW1, and VFW2 are three VFWs of the root firewall. Port 0, Port 1, and Port 2 are set in VFW0, VFW1, and VFW2 respectively. Each VFW has multiple security zones divided therein respectively. In the embodiment of the present invention, the VFW, for example, is divided into 2 security zones, including an untrusted zone and a trusted zone. Security policies are set between the security zones of each VFW.

A dashed line a in FIG. 1 represents a flow direction of data sent by VFW1, and the data is sent through Port0 of VFW0. A dashed line a' in FIG. 1 represents response data in response to the data which is represented by the dashed line a and is received by VFW1, and the data enters through Port0 of VFW0. In order to protect the data sent by VFW1, a tunnel IPSec1 is configured, and an output of IPSec1 is Port0 of VFW0. It should be noted that, IPSec1 is "unidirectional". Herein, "unidirectional" means that IPSec1 protects the data (as represented by the dashed line a in FIG. 1) that is sent by VFW1 and needs to be sent to a public network through VFW0, and the response data in response to the data that is sent by VFW1 and needs to be sent to a public network through VFW0 (as shown in FIG. 1, the response data in response to the data represented by the dashed line a is represented by the dashed line a'). That is, only the data that is sent by VFW1 and needs to be sent to the public network by VFW0 or the response data in response to the data received by VFW0 is allowed to enter IPSec1 for encryption or decryption. Data that is sent from VFW0 and intends to pass through VFW1 can only be protected by another IPSec tunnel that is configured for VFW0 and passes through VFW1. In order to handle inter-zone relations when the data crosses the VFWs, a protection zone is configured for IPSec1, and the protection zone of IPSec1 is the untrusted zone of VFW1. It should be noted that, the protection zone of the IPSec1 is not limited to the untrusted zone in VFW1, and can be any security zone in VFW 1.

Accordingly, a dashed line b in FIG. 1 represents a flow direction of data sent by VFW2, and the data is also sent through Port0 of VFW0. A dashed line b' in FIG. 1 represents response data in response to the data which is represented by the dashed line b and is received by VFW2, and the response data enters through Port0 of VFW0. In order to protect the data sent by VFW2, a tunnel IPSec2 is configured, and an output of the IPSec2 is Port0 of VFW0. It should also be noted that, IPSec2 is also "unidirectional", that is, IPSec2 only protects the data that is sent from VFW2 and needs to be sent to the public network through VFW0 (as represented by the dashed line b in FIG. 1) and the response data in response to the data (as shown in FIG. 1, the response data in response to the data represented by the dashed line b is represented by the dashed line b'). In order to handle inter-zone relations when the data crosses the VFWs, a protection zone is configured for IPSec2, and the protection zone of IPSec2 is the untrusted zone of VFW2. The protection zone of IPSec2 is not limited to the untrusted zone in VFW2, and can be any security zone in VFW2.

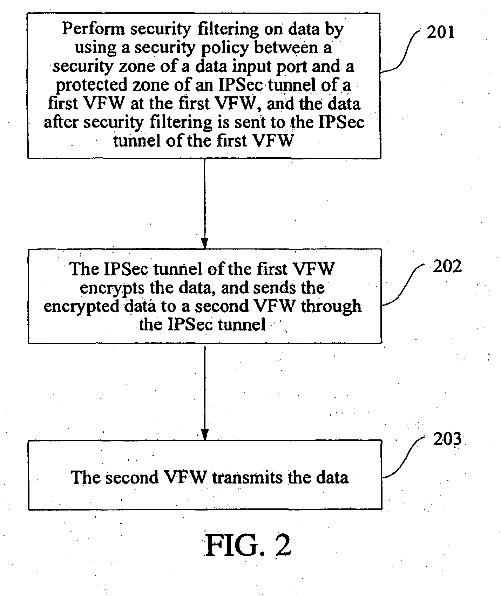

FIG. 2 is a schematic flow chart of sending data across VFWs according to an embodiment of the present invention, and shows the process of processing data when the data is sent by the VFWs in the embodiment of the present invention. Hereinafter, the processing process is specifically described with reference to the procedure of sending the data streams represented by the dashed lines a and b in FIG. 1 across the VFWs.

In step 201, security filtering is performed on data at a first VFW by using a security policy between a security zone of a data input port and a protection zone of an IPSec tunnel of a first VFW, and the data after the security filtering is sent to an IPSec tunnel of the first VFW;

As shown in FIG. 1, the dashed line a in FIG. 1 represents the data sent by VFW1, and the data needs to pass through VFW0. When sending data, VFW1 first performs security and defense processing on the data which is to be sent and is received by Port1 of VFW1. During configuration, VFW1 is configured with IPSec1 for data protection, and an untrusted security zone of VFW 1 is set as a protection zone of IPSec1. Therefore, when the data is sent from VFW1, security filtering is performed on the data by using the security policy between the trusted zone of Port1 where the data enters and the protection zone of IPSec1 of VFW1. The dashed line b in FIG. 1 represents the data sent by VFW2, and the data needs to pass through VFW0. During configuration, VFW2 is configured with IPSec2 for data protection, and an untrusted security zone of VFW2 is set as a protection zone of the IPSec2. Therefore, when the data is sent from VFW2, security filtering is performed on the data by using the security policy between the trusted zone of Port2 where the data enters and the protection zone of IPSec2 of VFW2.

In step 202, the IPSec tunnel of the first VFW encrypts the data passing the security filtering, and the encrypted data is sent to a second VFW through the IPSec tunnel.

As shown in FIG 1, after the data represented by the dashed line a passes the security filtering, IPSec1 of VFW1 encrypts the data, and the encrypted data is forwarded from VFW0 to the public network. Similarly, after the data represented by the dashed line b passes the security filtering, IPSec2 of VFW2 encrypts the data, and the encrypted data is forwarded from VFW0 to the public network.

A method for sending the encrypted data to the second VFW in step 202 may include, but is not limited to: tagging the encrypted data with a label of the second VFW, or marking the second VFW of the data in a forwarding list of the data.

In step 203, the second VFW sends the data.

In this embodiment, the IPSec tunnel is configured, the security of the forwarding of the data across the VFWs is ensured. Moreover, IPSec1 and IPSec2 are respectively configured with the protection zone of IPSec1 and the protection zone of IPSec2, and the protection zone of the IPSec1 is the original untrusted security zone of VFW1, and the protection zone of IPSec2 is also the original untrusted security zone of VFW2. Therefore, when VFW1 sends the data, the security filtering is performed on the data by using the security policy between the security zones of VFW1, that is, all the inter-zone relations for performing security and defense processing are the inter-zone relations of VFW1, and thus the process for handling the inter-zone relations during the cross-VFW sending in the prior art is simplified. Similarly, when VFW2 sends the data, the security filtering is also performed on the data by using the security policy between the security zones of VFW2. As certain measures are taken, the data encrypted by IPSec1 and IPSec2 can enter the VFW0 for forwarding, so that data in multiple VFWs can be forwarded through the same port, and thus the port is reused, and resources are saved.

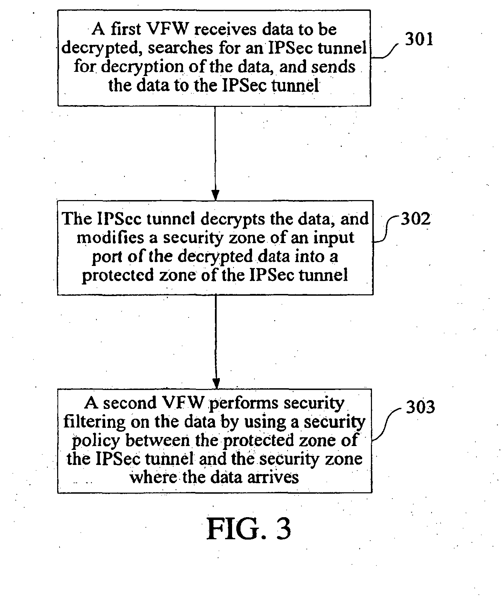

FIG. 3 is a schematic flow chart of receiving data across VFWs according to an embodiment of the present invention and shows the process of processing the data when the VFWs receives the data according to the embodiment of the present invention. All the data are the data to be decrypted, and the destination address of the data is directed to a local terminal. For ease of description, for example, process of processing response data (as represented by the dashed lines a' and b' in FIG. 1) of the data (as represented by the dashed lines a and b in FIG. 1) sent by VFW1 and VFW2 in the previous embodiment are described in detail in the following.

In step 301, a first VFW receives data to be decrypted, and an IPSec tunnel for decryption of the data to be decrypted is searched for, and then the data is sent to the IPSec tunnel.

As shown in FIG. 1, the dashed line a' in FIG. 1 represents response data in response to the data which is represented by the dashed line a and is received by VFW1, and the response data enters through Port0 of VFW0. The dashed line b' represents the response data in response to the data which is represented by the dashed line b and is received by VFW2, and the response data also enters through Port0 of VFW0. Therefore, the source VFW0 performs operation of searching for tunnels for decryption on the response data that enter, and sends the response data represented by a' to the tunnel IPSec1 for decryption and sends the response data represented by b' the tunnel IPSec2 for decryption.

In step 302, the IPSec tunnel decrypts the data, and modifies a security zone of an input port of the decrypted data into a protection zone of the IPSec tunnel.

As shown in FIG. 1, after decrypting the response data represented by a', IPSec1 modifies a parameter that indicates the security zone to which the input port of the data belongs (that is, the trusted zone of Port0 of VFW0) into the protection zone of IPSec1 (that is, the untrusted zone of VFW1). After decrypting the response data represented by b', IPSec2 modifies a parameter that indicates the security zone to which the input port of the data belongs (that is, the trusted zone of Port0 of VFW0) into the protection zone of IPSec2 (that is, the untrusted zone of VFW2).

In step 303, a second VFW performs security filtering on the data by using a security policy between the protection zone of the IPSec tunnel and the security zone where the data arrives.

As shown in FIG. 1, after the response data represented by the dashed line a' enters VFW1, security filtering is performed on the data by using the security policy between the protection zone of the IPSec1 (that is, the untrusted security zone of VFW1) and the security zone where the data arrives (that is, the trusted zone of VFW1); and after the response data represented by the dashed line b' enters VFW2, security filtering is performed on the data by using the security policy between the protection zone of IPSec2 (that is, the untrusted security zone of VFW2) and the security zone where the data arrives (that is, the trusted zone of VFW2).

A method for searching for tunnels for decrypting the data in step 301 is implemented by fetching a destination IP of the data, a Serial Peripheral interface (SPI, that is, a protocol field in Authentication Header (AH) protocol, Encapsulating Security Payload (ESP) Protocol), and a protocol type. The tunnels that the data needs to enter is searched for through the destination IP, the SPI, and the protocol type.

A method for modifying the security zone of the input port of the decrypted data in step 302 may include, but is not limited to: tagging the data with a label of the protection zone of the IPSec tunnel, or indicating in a forwarding list of the data that the security zone to which the input port of the data belongs is the protection zone of the IPSec tunnel.

It can be seen from the above embodiment, in the technical solutions of the embodiment of the present invention, when a VFW receives the response data as a local terminal firewall, the IPSec tunnel used when the VFW sends data as a local terminal firewall is utilized, and thus the security of the data is ensured. Moreover, as the input zone of the data is modified, in order to handle the inter-zone relations when the data crosses the VFWs, only the security policy between the existing security zone of the second VFW where which the data arrives needs to be used for performing security filtering on the data, thus the complicated process for handling the inter-zone relations in the prior art are simplified.

In the methods for sending and receiving data across the VFWs according to the previous embodiments of the present invention, the number of the ports of the VFWs is controlled by firewall equipment that is used, and is not limited to 3 ports as shown in FIG. 1. The ports in the embodiments of the present invention are not limited to physical ports or virtual ports, only if the ports can be set in the VFWs. The number of VFWs is determined according to the number of ports, that is, each virtual port is configured with a VFW. In the embodiments of the present invention, a port in any VFW can be used as a common output port of other VFWs, such as Port0 in FIG. 1.

In the technical solutions for sending and receiving data across the VFWs according to the embodiments of the present invention, any output can be set for the data that needs to be forwarded across the VFWs, only if a corresponding IPSec tunnel is configured for the VFWs before the data is forwarded. For example, the data in VFW1 may be sent through VFW0, and may also be sent through VFW2. Similarly, the data sent by VFW0 may also be sent through VFW1 or VFW2.

The methods for sending and receiving data across the VFWs according to the embodiments of the present invention are not only applicable to data forwarding between VFWs, but also applicable to data forwarding between a root firewall and a VFW when the root firewall is regarded as a special VFW.

In the technical solutions according to the embodiments of the present invention, when processing the data across the VFWs, as the IPSec technology is used, and the IPSec tunnel is configured with the protection zone, the security is ensured when the data is sent across the VFWs, no additional VZONE needs to be configured, and the security filtering is performed on the data by using the existing security zones of the VFWs and the security policy between the zones. Therefore, the complicated configuration of inter-zone security policies is eliminated, only one time of security filtering is required to ensure the security of the data during data transmission , and the process for handling the inter-zone relations are reduced. Furthermore, because the IPSec technology is used, the data can be forwarded from one VFW to another VFW, and ports can be shared, thus the ports of firewalls are reused, and resources are greatly saved.

Persons of ordinary skill in the art may understand that all or part of the steps of the method according to the embodiments of the present invention may be implemented by a program instructing relevant hardware. The program may be stored in a computer readable storage medium. When the program is run, the procedures of the embodiments of the above methods may be included. The storage medium may be a magnetic disk, a Compact Disk Read-Only Memory (CD-ROM), a Read-Only Memory (ROM) or a Random Access Memory (RAM).

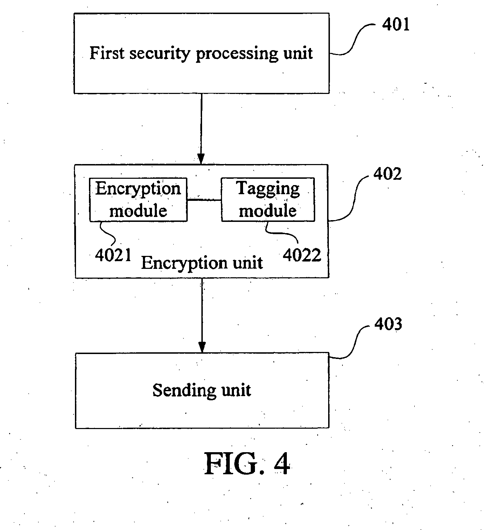

FIG. 4 is a schematic view of a sending apparatus according to an embodiment of the present invention. The sending apparatus includes a first security processing unit 401, an encryption unit 402, and a sending unit 403. The first security processing unit 401 and the sending unit 403 are set with security zones (including an untrusted zone and a trusted zone). Security policies are set between the security zones of the first security processing unit 401, and between the security zones of the sending unit 403 respectively. The encryption unit 402 includes an encryption module 4021 and a tagging module 4022. The encryption module 4021 is configured to encrypt data in the first security processing unit 401. The tagging module 4022 is configured to make the encrypted data enter the sending unit. The encryption unit 402 is set with a protection zone, and the protection zone is the untrusted zone of the first security processing unit 401. It should be noted that, the protection zone is not limited to the untrusted zone of the first security processing unit 401, and may be any security zone of the first security processing unit 401.

The first security processing unit 401 is configured to perform security filtering on data by using a security policy between a security zone of a data input port and the protection zone of the encryption unit 402, and sends the data after security filtering to the encryption unit 402.

The encryption unit 402 is configured to encrypt the data passing the first security processing unit 401, and send the encrypted data to the sending unit 403.

The encryption unit 402 includes the encryption module 4021 and the tagging module 4022. The encryption module 4021 is configured to encrypt data from the first security processing unit 401. The tagging module 4022 is configured to send the data encrypted by the encryption module 4021 to the sending unit 403. A method for sending the data to the sending unit 403 includes, but is not limited to: tagging the encrypted data with a label of the sending unit 403 or indicating the sending unit 403 in a forwarding list of the data by the tagging module 4022.

The sending unit 403 is configured to send the data encrypted by the encryption unit 402.

Herein, the sending apparatus includes firewalls or firewall-type equipment, and the encryption unit may be an IPSec tunnel.

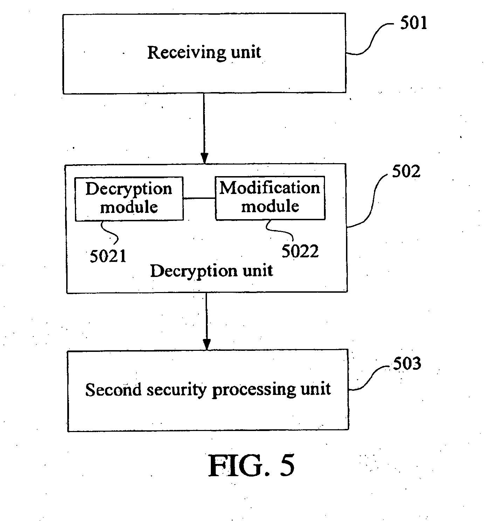

FIG. 5 is a schematic view of a receiving apparatus according to an embodiment of the present invention. The receiving apparatus includes a receiving unit 501, a decryption unit 502, and a second security processing unit 503. The receiving unit 501 and the second security processing unit 503 are set with security zones (including an untrusted zone and a trusted zone). Security policies are set between the security zones of the receiving unit 501, and between the security zones of the second security processing unit 503 respectively. The decryption unit 502 includes a decryption module 5021 and a modification module 5022. The decryption unit 502 is set with a protection zone. The protection zone is the untrusted zone of the second security processing unit 503. It should be noted that, the protection zone is not limited to the untrusted zone of the second security processing unit 503, and may be any security zone of the second security processing unit 503.

The receiving unit 501 is configured to receive data to be decrypted, search for the decryption unit of the data, and send the data to the decryption unit 502. A destination address of the data to be decrypted is a local terminal.

A method for searching for the decryption unit includes fetching a destination IP of the data, an SPI (a protocol field in AH Protocol, ESP Protocol), and a protocol type are fetched. The decryption unit 502 that the data is required to enter is searched for through the destination IP, the SPI, and the protocol type.

The decryption unit 502 is configured to decrypt the data which is to be decrypted and is received by the receiving unit 501, and change a security zone of an input port of the data to the protection zone of the decryption unit 502.

The decryption unit 502 includes a decryption module 5021 and a modification module 5022. The decryption module 5021 decrypts the data to be decrypted. The modification module 5022 is configured to modify the security zone to which the input port of the data decrypted by the decryption module 5021 belongs into the protection zone of the decryption unit 502. A method for modifying the security zone to which the input port of the data belongs by the modification module 5022 may include, but is not limited to: tagging the data with a label of the protection zone of the decryption unit 502 or indicating in a forwarding list of the data that the security zone of the data input port is the protection zone of the decryption unit 502.

The second security processing unit 503 is configured to perform security and defense processing on the data decrypted by the decryption unit 502. The security and defense processing is achieved by performing security filtering on the data by using a security policy between the protection zone of the decryption unit 502 and the security zone where the data arrives.

Herein, the receiving apparatus includes firewalls or firewall-type equipment, and the decryption unit may be an IPSec tunnel.

The first security processing unit of the sending apparatus and the second security processing unit of the receiving apparatus may physically be a same unit. Similarly, the encryption unit of the sending apparatus and the decryption unit of the receiving apparatus may also be a same unit, and the sending unit of the sending apparatus and the receiving unit of the receiving apparatus may also be a same unit.

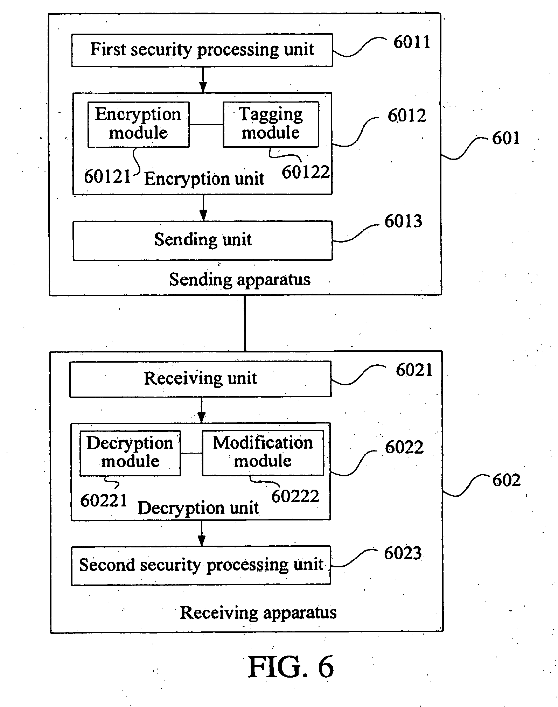

FIG. 6 is a schematic view of a network system helpful for understanding the present invention. The network system includes a sending apparatus 601 and a receiving apparatus 602.

The sending apparatus 601 is configured to send data.

The receiving apparatus 602 is configured to receive response data which is in response to the data sent by the sending apparatus 601. The response data is the data to be decrypted with a destination address directed to a local terminal.

The sending apparatus 601 includes a first security processing unit 6011, an encryption unit 6012, and a sending unit 6013. The encryption unit 6012 includes an encryption module 60121 and a tagging module 60121.

The first security processing unit 6011 and the sending unit 6013 are set with security zones (including an untrusted zone and a trusted zone). Security policies are set between the security zones of the first security processing unit 6011. Similarly, security policies are also set between the security zones of the sending unit 6013. The encryption unit 6012 is set with a protection zone. The protection zone of the encryption unit 6012 is the untrusted zone of the first security processing unit 6011. It should be noted that, the protection zone of the encryption unit 6012 is not limited to the untrusted zone of the first security processing unit 6011, and may be any security zone of the first security processing unit 6011.

The first security processing unit 6011 is configured to perform security filtering on data by using a security policy between a security zone of a data input port and the protection zone of the encryption unit 6012, and send the data on which security filtering has been performed to the encryption unit 6012.

The encryption unit 6012 is configured to encrypt the data passing the first security processing unit 6011, and send the data to the sending unit 6013.

The encryption unit 6012 includes the encryption module 60121 and the tagging module 60122. The encryption module 60121 is configured to encrypt data from the first security processing unit 6011. The tagging module 60122 is configured to send the data encrypted by the encryption module 60121 to the sending unit 6013. A method for sending the data to the sending unit 6013 includes, but is not limited: tagging the encrypted data with a label of the sending unit 6013 or indicating the sending unit 6013 in a forwarding list of the data by the tagging module 601222.

The sending unit 6013 is configured to send the data encrypted by the encryption unit 6012.

The receiving apparatus 602 includes a receiving unit 6021, a decryption unit 6022, and a second security processing unit 6023. The decryption unit 6022 includes a decryption module 60221 and a modification module 60222.

The receiving unit 6021 and the second security processing unit 6023 are also set with security zones (including an untrusted zone and a trusted zone). Security policies are set between the security zones of the receiving unit 6021. Similarly, security policies are also set between the security zones of the processing unit 6023. The decryption unit 6022 is set with a protection zone. The protection zone of the decryption unit 6022 is the untrusted zone of the second security processing unit 6023. It should be noted that, the protection zone of the decryption unit 6022 is not limited to the untrusted zone of the second security processing unit 6023, and may be any security zone of the second security processing unit 6023.

The receiving unit 6021 is configured to receive data to be decrypted, search for the decryption unit of the data, and send the data to the decryption unit 6022. A destination address of the data to be decrypted is a local terminal.

A method for searching for the decryption unit includes fetching a destination IP of the data, an SPI (a protocol field in AH Protocol, ESP Protocol), and a protocol type. The decryption unit 6022 that the data needs to enter is searched for through the destination IP, the SPI, and the protocol type.

The decryption unit 6022 is configured to decrypt the data which is to be decrypted and is received by the receiving unit 6021, and modify a security zone of an input port of the decrypted data into the protection zone of the decryption unit 6022.

The decryption unit 6022 includes a decryption module 60221 and a modification module 60222. The decryption module 60221 is configured to decrypt the data to be decrypted. The modification module 60222 is configured to modify the security zone to which the input port of the data decrypted by the decryption module 60221 belongs into the protection zone of the decryption unit 6022. A method for modifying the security zone to which the input port of the data belongs by the modification module 60222 includes, but is not limited to: tagging the data with a label of the protection zone of the decryption unit 6022, or indicating in a forwarding list of the data that the security zone of the data input port is the protection zone of the decryption unit 6022.

The second security processing unit 6023 is configured to perform security and defense processing on the data decrypted by the decryption unit 6022. The security and defense processing is achieved by performing security filtering on the data by using a security policy between the protection zone of the decryption unit 6022 and the security zone where the data arrives.

Herein, the sending apparatus and the receiving apparatus include firewalls or firewall-type equipment, and the encryption unit and the decryption unit may be an IPSec tunnel.

In the network system, the first security processing unit of the sending apparatus and the second security processing unit of the receiving apparatus may physically be a same unit. Similarly, the encryption unit of the sending apparatus and the decryption unit of the receiving apparatus may also be a same unit, and the sending unit of the sending apparatus and the receiving unit of the receiving apparatus may also be a same unit.

## Claims

1. A method for sending data across virtual firewalls, VFWs, wherein the VFWs are set with a corresponding secure tunnel, the secure tunnel is set with a protection zone, and the method for sending data across VFWs comprises:
performing security filtering (201) on data at a first VFW by using a security policy between a security zone of a data input port and a protection zone of a secure tunnel of the first VFW, and sending the data after the security filtering to the secure tunnel of the first VFW; and
encryptin (202), by the secure tunnel of the first VFW, the data passing the security filtering; and sending, by the secure tunnel of the first VFW, the encrypted data to a second VFW, wherein the second VFW is configured to send the data (203).

2. The sending method according to claim 1, wherein the protection zone of the secure tunnel is a security zone in a firewall protected by the secure tunnel.

3. The sending method according to claim 1, wherein a method for sending the encrypted data to the second VFW by the secure tunnel comprises: tagging the data with a label of the second VFW.

4. The sending method according to claim 1, wherein a method for sending the encrypted data to the second VFW by the secure tunnel further comprises: marking the second VFW in a forwarding list of the data.

5. A method for receiving data across virtual firewalls, VFWs, wherein the VFWs are set with a corresponding secure tunnel, the secure tunnel is set with a protection zone, and the method for receiving data across VFWs comprises:
receiving (301), by a first VFW, data to be decrypted, searching for a secure tunnel for decryption of the data, and sending the data to the secure tunnel for decryption;
decrypting (302), by the secure tunnel for decryption, the data, and modifying a security zone of an input port of the decrypted data into a protection zone of the secure tunnel for decryption; and
performing, by a second VFW, security filtering (303) on the data by using a security policy between the protection zone of the secure tunnel for decryption and the security zone where the data arrives.

6. The receiving method according to claim 5, wherein the protection zone of the secure tunnel is a security zone in a firewall protected by the secure tunnel.

7. The receiving method according to claim 5, wherein a method for searching for the secure tunnel for decryption of the data comprises: fetching a destination IP of the data, a Serial Peripheral Interface, SPI, and a protocol type, and searching for the secure tunnel for decryption which the data is required to enter according to the destination IP, the SPI, and the protocol type.

8. The receiving method according to claim 5, wherein a method for modifying the security zone of the input port of the decrypted data comprises: tagging the data with a label of the protection zone of the secure tunnel for decryption.

9. The receiving method according to claim 5, wherein a method for modifying a source security zone of the decrypted data further comprises: marking in a forwarding list of the data that the security zone to which the input port of the data belongs is the protection zone of the secure tunnel for decryption.

10. A sending apparatus, comprising a first security processing unit (401), an encryption unit (402), and a sending unit (403), wherein the first security processing unit is set with security zones, security policies are set between the security zones respectively, and the encryption unit is set with a protection zone, wherein
the first security processing unit is configured to perform security filtering on data by using a security policy between a security zone of a data input port and the protection zone of the encryption unit, and send the data after the security filtering to the encryption unit;
the encryption unit is configured to encrypt the data from the first security processing unit, and send the encrypted data to the sending unit; and
the sending unit is configured to send the data encrypted by the encryption unit.

11. The sending apparatus according to claim 10, wherein the protection zone of the encryption unit is the security zone of the first security processing unit.

12. The sending apparatus according to claim 10, wherein the encryption unit comprises an encryption module (4021) and a tagging module (4022),
the encryption module is configured to encrypt the data from the first security processing unit; and
the tagging module is configured to tag the data encrypted by the encryption module with a label of the sending unit, and send the encrypted data to the sending unit; or
the tagging module is configured to mark the sending unit of the encrypted data in a forwarding list of the data, and send the encrypted data to the sending unit.

13. A receiving apparatus, comprising a receiving unit (501), a decryption unit (502), and a second security processing unit (503), wherein the second security processing unit is set with security zones, and security policies are set between the security zones, the decryption unit is set with a protection zone, wherein
the receiving unit is configured to receive data to be decrypted, search for the decryption unit of the data, and send the data to the decryption unit;
the decryption unit is configured to decrypt the data to be decrypted received by the receiving unit, and modify a security zone of an input port of the data into the protection zone of the decryption unit; and
the second security processing unit is configured to perform security filtering on the data by using a security policy between the protection zone of the decryption unit and the security zone where the data arrives.

14. The receiving apparatus according to claim 13, wherein the protection zone of the encryption unit is the security zone of the second security processing unit.

15. The receiving apparatus according to claim 13, wherein the decryption unit comprises a decryption module (5021) and a modification module(5022), wherein
the decryption module is configured to decrypt the data to be decrypted received by the receiving unit; and
the modification module is configured to modify the security zone to which the input port of the data decrypted by the decryption module belongs into the protection zone of the decryption unit.

## Patentansprüche

1. Verfahren zum Senden von Daten durch virtuelle Firewalls, VFW, wobei die VFWs mit einem entsprechenden sicheren Tunnel ausgestattet sind, der sichere Tunnel mit einer Schutzzone ausgestattet ist, und das Verfahren zum Senden von Daten durch VFWs die folgenden Schritte aufweist:
Durchführen einer Sicherheitsfilterung (201) an Daten an einer ersten VFW mittels einer Sicherheitsrichtlinie zwischen einer Sicherheitszone eines Dateneingangsports und einer Schutzzone eines sicheren Tunnels der ersten VFW, und Senden der Daten nach der Sicherheitsfilterung an den sicheren Tunnel der ersten VFW; und
Verschlüsseln (202) durch den sicheren Tunnel der ersten VFW der Daten, die die Sicherheitsfilterung passieren; und Senden durch den sicheren Tunnel der ersten VFW der verschlüsselten Daten an eine zweite VFW, wobei die zweite VFW konfiguriert ist, die Daten zu senden (203).

2. Sendeverfahren nach Anspruch 1, wobei die Schutzzone des sicheren Tunnels eine Sicherheitszone in einer Firewall ist, die durch den sicheren Tunnel geschützt ist.

3. Sendeverfahren nach Anspruch 1, wobei ein Verfahren zum Senden der verschlüsselten Daten an die zweite VFW durch den sicheren Tunnel aufweist: Kennzeichnen der Daten mit einem Kennsatz der zweiten VFW.

4. Sendeverfahren nach Anspruch 1, wobei ein Verfahren zum Senden der verschlüsselten Daten an die zweite VFW durch den sicheren Tunnel ferner aufweist: Markieren der zweiten VFW in einer Weiterleitungsliste der Daten.

5. Verfahren zum Empfangen von Daten durch virtuelle Firewalls, VFW, wobei die VFW mit einem entsprechenden sicheren Tunnel ausgestattet sind, der sichere Tunnel mit einer Schutzzone ausgestattet ist und das Verfahren zum Empfangen von Daten durch VFW die folgenden Schritte aufweist:
Empfangen (301) durch eine erste VFW von zu entschlüsselnden Daten, Suchen nach einem sicheren Tunnel zur Entschlüsselung der Daten, und Senden der Daten an den sicheren Tunnel zur Entschlüsselung;
Entschlüsseln (302) durch den sicheren Tunnel zur Entschlüsselung der Daten und
Modifizieren einer Sicherheitszone eines Eingangsports der entschlüsselten Daten zu einer Schutzzone des sicheren Tunnels zur Entschlüsselung; und
Durchführen durch eine zweite VFW einer Sicherheitsfilterung (303) an den Daten mittels einer Sicherheitsrichtlinie zwischen der Schutzzone des sicheren Tunnels zur Entschlüsselung und der Sicherheitszone, wo die Daten ankommen.

6. Empfangsverfahren nach Anspruch 5, wobei die Schutzzone des sicheren Tunnels eine Sicherheitszone in einer Firewall ist, die durch den sicheren Tunnel geschützt ist.

7. Empfangsverfahren nach Anspruch 5, wobei ein Verfahren zum Suchen nach dem sicheren Tunnel zur Entschlüsselung der Daten aufweist: Abrufen einer Ziel-IP der Daten, eines "Serial Peripheral Interface", SPI, und eines Protokolltyps, und Suchen nach dem sicheren Tunnel zur Entschlüsselung, in den die Daten eintreten sollen, gemäß der Ziel-IP, des SPI und dem Protokolltyp.

8. Empfangsverfahren nach Anspruch 5, wobei ein Verfahren zum Modifizieren der Sicherheitszone des Eingangsports der entschlüsselten Daten aufweist: Kennzeichnen der Daten mit einem Kennsatz der Schutzzone des sicheren Tunnels zur Entschlüsselung.

9. Empfangsverfahren nach Anspruch 5, wobei ein Verfahren zum Modifizieren einer Quellsicherheitszone der entschlüsselten Daten ferner aufweist: Markieren in einer Weiterleitungsliste der Daten, dass die Sicherheitszone, zu der der Eingangsport der Daten gehört, die Schutzzone des sicheren Tunnels zur Entschlüsselung ist.

10. Sendevorrichtung, die Folgendes aufweist: eine erste Sicherheitsverarbeitungseinheit (401), eine Verschlüsselungseinheit (402) und eine Sendeeinheit (403), wobei die erste Sicherheitsverarbeitungseinheit mit Sicherheitszonen ausgestattet ist, jeweils Sicherheitsrichtlinien zwischen den Sicherheitszonen festgelegt sind, und die Verschlüsselungseinheit mit einer Schutzzone ausgestattet ist, wobei die erste Sicherheitsverarbeitungseinheit konfiguriert ist, eine Sicherheitsfilterung an Daten mittels einer Sicherheitsrichtlinie zwischen einer Sicherheitszone eines Dateneingangsports und der Schutzzone der Verschlüsselungseinheit durchzuführen, und die Daten nach der Sicherheitsfilterung an die Verschlüsselungseinheit zu senden; die Verschlüsselungseinheit konfiguriert ist, die Daten aus der ersten Sicherheitsverarbeitungseinheit zu verschlüsseln, und die verschlüsselten Daten an die Sendeeinheit zu senden; und
die Sendeeinheit konfiguriert ist, die durch die Verschlüsselungseinheit verschlüsselten Daten zu senden.

11. Sendevorrichtung nach Anspruch 10, wobei die Schutzzone der Verschlüsselungseinheit die Sicherheitszone der ersten Sicherheitsverarbeitungseinheit ist.

12. Sendevorrichtung nach Anspruch 10, wobei die Verschlüsselungseinheit ein Verschlüsselungsmodul (4021) und ein Kennzeichnungsmodul (4022) aufweist,
das Verschlüsselungsmodul konfiguriert ist, die Daten aus der ersten Sicherheitsverarbeitungseinheit zu verschlüsseln; und
das Kennzeichnungsmodul konfiguriert ist, die durch das Verschlüsselungsmodul verschlüsselten Daten mit einem Kennsatz der Sendeeinheit zu kennzeichnen und die verschlüsselten Daten an die Sendeeinheit zu senden; oder
das Kennzeichnungsmodul konfiguriert ist, die Sendeeinheit der verschlüsselten Daten in einer Weiterleitungsliste der Daten zu markieren und die verschlüsselten Daten an die Sendeeinheit zu senden.

13. Empfangsvorrichtung, die Folgendes aufweist: eine Empfangseinheit (501), eine Entschlüsselungseinheit (502) und eine zweite Sicherheitsverarbeitungseinheit (503), wobei die zweite Sicherheitsverarbeitungseinheit mit Sicherheitszonen ausgestattet ist, und Sicherheitsrichtlinien zwischen den Sicherheitszonen festgelegt sind, die Entschlüsselungseinheit mit einer Schutzzone ausgestattet ist, wobei die Empfangseinheit konfiguriert ist, zu entschlüsselnde Daten zu empfangen, nach der Entschlüsselungseinheit der Daten zu suchen und die Daten an die Entschlüsselungseinheit zu senden;
die Entschlüsselungseinheit konfiguriert ist, die zu entschlüsselnden Daten zu entschlüsseln, die durch die Empfangseinheit empfangen werden, und eine Sicherheitszone eines Eingangsports der Daten zur Schutzzone der Entschlüsselungseinheit zu modifizieren; und
die zweite Sicherheitsverarbeitungseinheit konfiguriert ist, eine Sicherheitsfilterung an den Daten mittels einer Sicherheitsrichtlinie zwischen der Schutzzone der Entschlüsselungseinheit und der Sicherheitszone durchzuführen, wo die Daten ankommen.

14. Empfangsvorrichtung nach Anspruch 13, wobei die Schutzzone der Verschlüsselungseinheit die Sicherheitszone der zweiten Sicherheitsverarbeitungseinheit ist.

15. Empfangsvorrichtung nach Anspruch 13, wobei die Entschlüsselungseinheit ein Entschlüsselungsmodul (5021) und ein Modifikationsmodul (5022) aufweist, wobei das Entschlüsselungsmodul konfiguriert ist, die zu entschlüsselnden Daten zu entschlüsseln, die durch die Empfangseinheit empfangen werden; und
das Modifikationsmodul konfiguriert ist, die Sicherheitszone, zu der der Eingangsport der Daten gehört, die durch das Entschlüsselungsmodul entschlüsselt werden, zur Schutzzone der Entschlüsselungseinheit zu modifizieren.

## Revendications

1. Procédé d'envoi de données à travers des coupe-feu virtuels, VFW (virtual firewalls), dans lequel les VFW sont définis avec un tunnel sécurisé correspondant, le tunnel sécurisé est défini avec une zone de protection, et le procédé d'envoi de données à travers des VFW comprend :
l'exécution d'un filtrage de sécurité (201) de données sur un premier VFW en utilisant une politique de sécurité entre une zone de sécurité d'un port d'entrée de données et
une zone de protection d'un tunnel sécurisé du premier VFW, et l'envoi des données après le filtrage de sécurité au tunnel sécurisé du premier VFW ; et
le cryptage (202), par le tunnel sécurisé du premier VFW, des données passant à travers le filtrage de sécurité ; et l'envoi, par le tunnel sécurisé du premier VFW, des données cryptées à un second VFW, dans lequel le second VFW est configuré pour envoyer les données (203).

2. Procédé d'envoi selon la revendication 1, dans lequel la zone de protection du tunnel sécurisé est une zone de sécurité dans un coupe-feu protégé par le tunnel sécurisé.

3. Procédé d'envoi selon la revendication 1, dans lequel un procédé d'envoi des données cryptées au second VFW par le tunnel sécurisé comprend : le balisage des données avec une étiquette du second VFW.

4. Procédé d'envoi selon la revendication 1, dans lequel un procédé d'envoi des données cryptées au second VFW par le tunnel sécurisé comprend en outre : le marquage du second VFW dans une liste de réacheminement des données.

5. Procédé de réception de données à travers des coupe-feu virtuels, VFW, dans lequel les VFW sont définis avec un tunnel sécurisé correspondant, le tunnel sécurisé est défini avec une zone de protection, et le procédé de réception de données à travers des VFW comprend :
la réception (301), par un premier VFW, de données devant être décryptées, la recherche d'un tunnel sécurisé pour décrypter les données, et l'envoi des données au tunnel sécurisé pour le décryptage ;
le décryptage (302), par le tunnel sécurisé de décryptage, des données, et la transformation d'une zone de sécurité d'un port d'entrée des données décryptées en une zone de protection du tunnel sécurisé de décryptage ; et
l'exécution, par un second VFW, d'un filtrage de sécurité (303) sur les données en utilisant une politique de sécurité entre la zone de protection du tunnel sécurisé de décryptage et la zone de sécurité où arrivent les données.

6. Procédé de réception selon la revendication 5, dans lequel la zone de protection du tunnel sécurisé est une zone de sécurité dans un coupe-feu protégé par le tunnel sécurisé.

7. Procédé de réception selon la revendication 5, dans lequel un procédé de recherche du tunnel sécurisé de décryptage des données comprend : la recherche d'une IP de destination des données, d'une Interface de Périphérique Série, SPI (Serial Peripheral Interface), et d'un type de protocole, et la recherche du tunnel sécurisé de décryptage dans lequel les données doivent pénétrer en fonction de l'IP de destination, de la SPI et du type de protocole.

8. Procédé de réception selon la revendication 5, dans lequel un procédé de modification de la zone de sécurité du port d'entrée des données décryptées comprend : le balisage des données avec une étiquette de la zone de protection du tunnel sécurisé de décryptage.

9. Procédé de réception selon la revendication 5, dans lequel un procédé de modification d'une zone de sécurité de source des données décryptées comprend en outre : le marquage, dans une liste de réacheminement des données, du fait que la zone de sécurité à laquelle appartient le port d'entrée des données est la zone de protection du tunnel sécurisé de décryptage.

10. Appareil d'envoi, comprenant une première unité de traitement de sécurité (401), une unité de cryptage (402), une unité d'envoi (403), dans lequel la première unité de traitement de sécurité est définie avec des zones de sécurité, des politiques de sécurité sont respectivement définies entre les zones de sécurité, et l'unité de cryptage est définie avec une zone de protection, dans lequel
la première unité de traitement de sécurité est configurée pour effectuer un filtrage de sécurité sur des données en utilisant une politique de sécurité entre une zone de sécurité d'un port d'entrée de données et la zone de protection de l'unité de cryptage, et envoyer les données à l'unité de cryptage après le filtrage de sécurité ;
l'unité de cryptage est configurée pour crypter les données provenant de la première unité de traitement de sécurité, et envoyer les données cryptées à l'unité d'envoi ; et l'unité d'envoi est configurée pour envoyer les données cryptées par l'unité de cryptage.

11. Appareil d'envoi selon la revendication 10, dans lequel la zone de protection de l'unité de cryptage est la zone de sécurité de la première unité de traitement de sécurité.

12. Appareil d'envoi selon la revendication 10, dans lequel l'unité de cryptage comprend un module de cryptage (4021) et un module de balisage (4022) ;
le module de cryptage est configuré pour crypter les données provenant de la première unité de traitement de sécurité ; et
le module de balisage est configuré pour baliser les données cryptées par le module de cryptage avec une étiquette de l'unité d'envoi, et envoyer les données cryptées à l'unité d'envoi ; ou
le module de balisage est configuré pour marquer l'unité d'envoi des données cryptées dans une liste de réacheminement de données, et envoyer les données cryptées à l'unité d'envoi.

13. Appareil de réception, comprenant une unité de réception (501), une unité de décryptage (502), et une seconde unité de traitement de sécurité (503), dans lequel la seconde unité de traitement de sécurité est définie avec des zones de sécurité, et des politiques de sécurité sont définies entre les zones de sécurité, l'unité de décryptage est définie avec une zone de protection, dans lequel
l'unité de réception est configurée pour recevoir des données devant être décryptées, rechercher l'unité de décryptage des données, et envoyer les données à l'unité de décryptage ;
l'unité de décryptage est configurée pour décrypter les données devant être décryptées et reçues par l'unité de réception, et transformer une zone de sécurité d'un port d'entrée des données en la zone de protection de l'unité de décryptage ; et
la seconde unité de traitement de sécurité est configurée pour effectuer un filtrage de sécurité sur les données en utilisant une politique de sécurité entre la zone de protection de l'unité de décryptage et la zone de sécurité où arrivent les données.

14. Appareil de réception selon la revendication 13, dans lequel la zone de protection de l'unité de cryptage est la zone de sécurité de la seconde unité de traitement de sécurité.

15. Appareil de réception selon la revendication 13, dans lequel l'unité de décryptage comprend un module de décryptage (5021) et un module de modification (5022), dans lequel
le module de décryptage est configuré pour décrypter les données devant être décryptées et reçues par l'unité de réception ; et
le module de modification est configuré pour transformer la zone de sécurité à laquelle appartient le port d'entrée des données décryptées par le module de décryptage en la zone de protection de l'unité de décryptage.
